# FASCICULE DE BREVET EUROPEEN

(11) **EP 1 789 288 B1**
(45) Date de publication et mention de la délivrance du brevet: **17.06.2009**
(21) Numéro de dépôt: 05791068.9
(22) Date de dépôt: 12.07.2005
(51) Int. Cl.: B60R 19/52

(54) **PIECE DE CARROSSERIE EN MATIERE PLASTIQUE COMPRENANT UNE GRILLE MOULEE D'UN SEUL TENANT AVEC LA PIECE**
KUNSTSTOFFKAROSSERIETEIL MIT EINEM MIT DEM TEIL EINSTÜCKIGGEFORMTEN GRILL
PLASTIC BODYWORK PART COMPRISING A GRILLE MOULDED IN A SINGLE-UNIT WITH THE PART

(30) Priorité: 16.07.2004 FR 0407950
(43) Date de publication de la demande: 30.05.2007
(73) Titulaire: Compagnie Plastic Omnium, 69007 Lyon (FR)
(72) Inventeur: TROTON, Jean, 81375 Munich (DE)
(74) Mandataire: Remy, Vincent Noel Paul
(86) Numéro de dépôt international: PCT/FR2005/001800
(87) Numéro de publication internationale: WO 2006/016064

(56) Documents cités:
- FR-A- 2 821 817

## Description

L'invention concerne une pièce de carrosserie en matière plastique, telle qu'un bouclier de pare-chocs, comprenant une grille moulée d'un seul tenant avec la pièce.

On connaît déjà, voir FR2821817A, une telle pièce qui présente l'avantage que la grille, déjà présente sur la peau, n'a pas à être moulée séparément puis montée sur la peau, ce qui économise deux opérations et réduit en conséquence le prix de revient de la pièce.

Cependant, un inconvénient d'une telle pièce est qu'il faut la remplacer intégralement en cas de détérioration de la grille, ce qui est coûteux.

On connaît par ailleurs des pièces de carrosserie à grille remplaçable, du type comprenant une peau pourvue d'une ouverture de réception de grille et de pattes d'encliquetage pour une grille venant se loger dans l'ouverture et réalisée séparément. En cas de détérioration de la grille, une grille de remplacement peut aisément être insérée à la place de la grille détériorée, après démontage de la grille détériorée.

A l'inverse de la pièce de carrosserie d'un seul tenant avec grille, cette pièce présente l'inconvénient que la première grille doit être moulée séparément puis montée sur la peau, d'où le surcoût déjà évoqué.

La présente invention vise à proposer une solution conciliant les avantages des deux solutions précédemment décrites.

La présente invention a pour objet une pièce de carrosserie en matière plastique comportant une peau et une grille d'origine moulée d'un seul tenant avec une portion de la pièce et réunie à cette dernière par des ponts de matière qui comporte des moyens de fixation d'une grille de remplacement, qui sont également issus de moulage avec une portion de la pièce.

L'invention permet de bénéficier de l'avantage d'un moulage d'un seul tenant de la pièce avec une première grille ainsi que de l'avantage que cette grille peut être remplacée par une autre grille en cas de détérioration, l'autre grille étant rapportée sur la pièce après élimination de la grille détériorée, les ponts de matière ayant été rompus ou coupés, et fixée grâce aux moyens de fixation présents sur la pièce.

L'invention présente également l'avantage que pour un véhicule présentant différentes versions dans lesquelles les grilles doivent présenter un aspect différent, on peut réaliser la pièce avec une grille d'origine dans sa version la plus courante et, pour certaines versions du véhicule, remplacer cette grille par une grille spécifique, moulée séparément.

Dans un mode de réalisation particulier de l'invention, la pièce est un bouclier de pare-chocs.

Dans un autre mode de réalisation, la pièce est constituée par l'ensemble d'une peau de pare-chocs et d'une armature, destinées à être fixées l'une sur l'autre. Dans ce cas la peau constitue une portion de la pièce qui inclut les moyens de fixation pour une grille de remplacement et l'armature constitue une autre portion de la pièce qui inclut les ponts de matière avec la grille d'origine.

Dans ce mode de réalisation, la peau peut être agencée pour cacher les ponts de matière entre l'armature et la grille d'origine, de sorte qu'après découpe de ces derniers, il ne subsiste aucune trace visible de la grille d'origine depuis l'extérieur du véhicule.

Selon un mode de réalisation plus perfectionné, la grille d'origine, issue de moulage avec l'armature, comporte des moyens de positionnement de la peau. Ce mode de réalisation perfectionné procure l'avantage significatif que la peau peut ainsi être directement mise en référence par rapport à la grille, ce qui permet de faire parfaitement coïncider une ouverture ménagée dans la peau et la grille solidaire de l'armature.

Ainsi les moyens de positionnement assurent indirectement le positionnement de la peau par rapport à l'armature.

De préférence, les moyens de positionnement de la peau présents sur la grille d'origine s'accouplent avec les moyens de fixation de la grille de remplacement présents sur la peau.

Dans un mode de réalisation particulier, la pièce comprend en outre des seconds moyens de fixation d'une grille de remplacement, pour se substituer aux premiers moyens de fixation s'ils sont détériorés.

Afin de mieux faire comprendre l'invention, on va en décrire maintenant un mode de réalisation, donné à titre d'exemple non limitatif de la portée de l'invention, en référence aux dessins annexés dans lesquels :
- la figure 1 est une vue de face d'un bouclier de pare-chocs selon un premier mode de réalisation de l'invention
- la figure 2 est une section selon II/II de la figure 1 ;
- la figure 2A est une vue à plus grande échelle de la région A de la figure 2;
- la figure 3 est une vue de face d'une grille de remplacement prévue pour le bouclier de la figure 1 ;
- la figure 4 est une vue analogue à la figure 2 montrant le remplacement de la grille d'origine;
- la figure 5 est une vue en coupe et en perspective d'une armature d'un bouclier de pare-chocs selon un deuxième mode de réalisation de l'invention ;
- la figure 6 est une vue analogue à la figure 5 montrant l'armature recouverte par une peau ;
- la figure 7 est une section selon VII/VII de la figure 6 ;
- la figure 8 est une vue analogue à la figure 7 montrant le remplacement de la grille d'origine et ;
- la figure 9 est une vue analogue à la figure 7 montrant le bouclier muni d'une grille de remplacement.

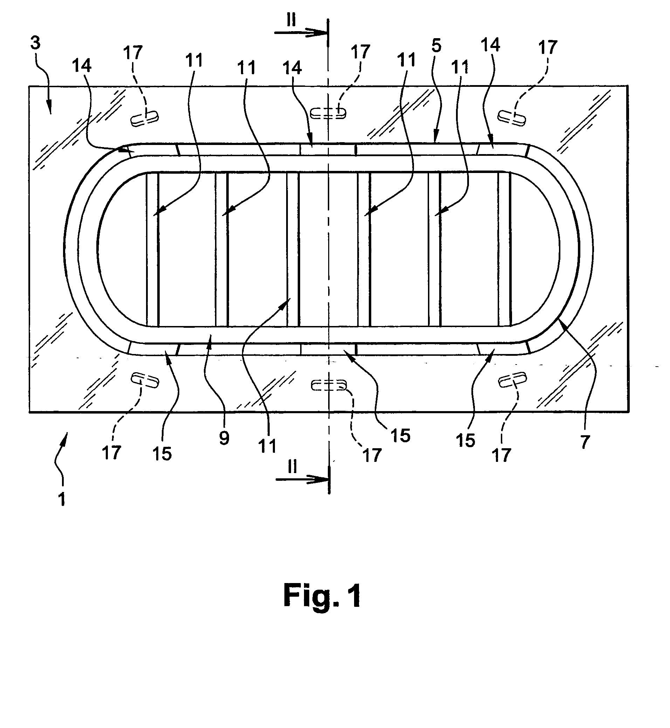

Dans le premier mode de réalisation, qui est illustré par les figures 1 à 4, un bouclier de pare-chocs 1 est constitué par une peau en matière plastique 3, par exemple en polypropylène. Ce bouclier est de préférence réalisé par moulage par injection.

Sensiblement dans sa partie centrale, la peau 3 comporte une ouverture oblongue 5 qui est occupée par une grille d'origine 7, elle-même constituée par un cadre oblong 9 et des barreaux verticaux 11 (selon l'orientation du dessin).

Le cadre 9 de la grille 7 est relié à la peau 3 par des ponts de matière supérieurs 14 et inférieurs 15 en forme de languettes, qui dans l'exemple représenté sur le dessin, sont au nombre total de six.

L'intégralité du bouclier 1 est issue d'une unique opération de moulage, d'où sont issus la peau 3, la grille 7 et les ponts de matière 13.

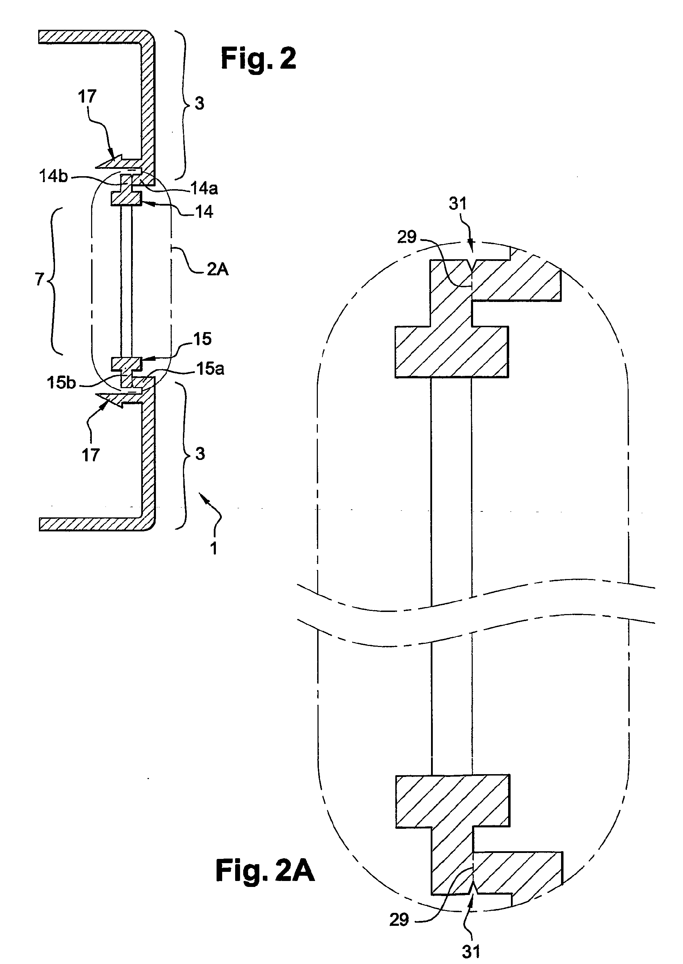

Comme on le voit sur la figure 2, la grille 7 se trouve légèrement en retrait de la face avant de la peau 3, les ponts de matière 14 et 15 étant conformés en L avec une branche sensiblement horizontale 14a et 15a (selon l'orientation des dessins) et une branche sensiblement verticale (selon l'orientation des dessins) 14b et 15b.

Au-dessus de chaque pont de matière supérieur 14 et en dessous de chaque pont de matière inférieur 15, la peau 3 comporte une languette d'encliquetage 17 en saillie de sa face intérieure, également issue de moulage avec ladite peau.

Ainsi, six languettes d'encliquetage 17 sont situées autour de la grille 7 en étant radialement plus éloignées de celle-ci que les ponts de matière 14 et 15.

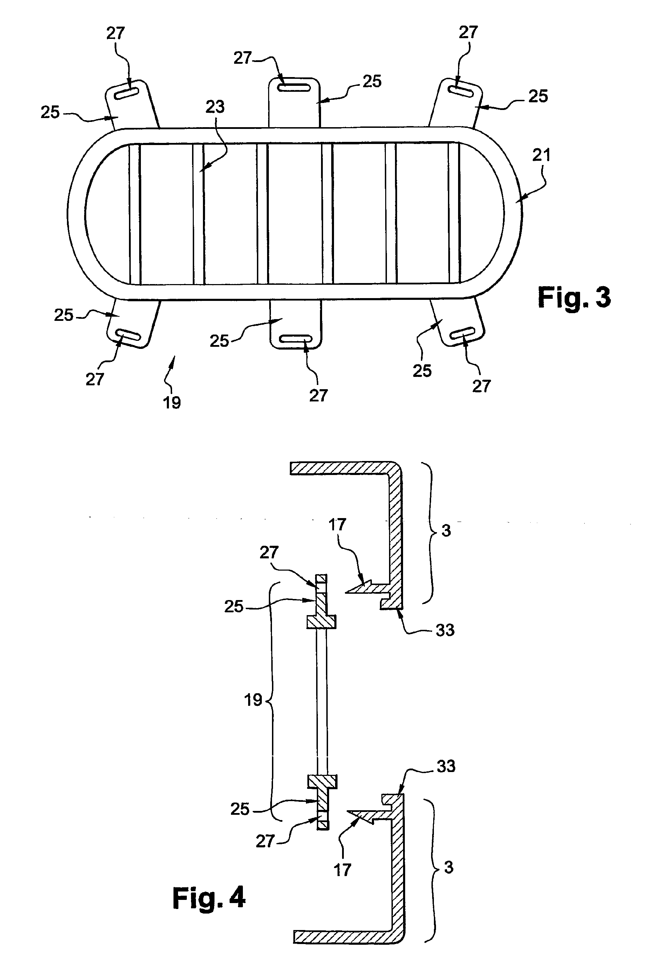

Ces languettes d'encliquetage 17 constituent des moyens de fixation d'une grille de remplacement 19 qui va maintenant être décrite en référence à la figure 3.

La grille de remplacement 19 comprend, comme la grille d'origine 7 précédemment décrite, un cadre en matière plastique 21 et des barreaux verticaux 23 (selon l'orientation des dessins), le cadre 21 ayant sensiblement la même géométrie que le cadre 9 de la grille d'origine 7.

Dans l'exemple représenté, les barreaux 23 sont identiques entre la grille d'origine 7 et la grille de remplacement 19 mais une autre configuration de barreaux ne sortirait pas du cadre de l'invention, en particulier s'il s'agissait de remplacer la grille d'origine 7 par une grille plus haut de gamme.

La grille de remplacement 19 comporte en outre des oreilles de fixation 25 au nombre de six dans chacune desquelles est ménagée une fente 27 dimensionnée pour le passage d'une languette d'encliquetage 17 de la peau. Les six languettes 25 de la grille de remplacement 19 sont positionnées de manière que leurs fentes 27 coïncident avec les six languettes d'encliquetage 17 de la peau 3 lorsque l'on présente la grille de remplacement 19 en arrière de la peau 3, comme représenté sur la figure 4.

On va maintenant décrire la manière dont la grille d'origine 7, issue de moulage avec la peau 3 peut être remplacée par la grille de remplacement 19.

Avec un outillage approprié, on découpe ou on rompt les ponts de matière 13 et 15 selon le trait interrompu 29 porté sur la figure 2A.

A cet effet, les ponts de matière 14 et 15 peuvent comporter une zone de fragilité ou une zone sécable, obtenue par un rétrécissement de section 31 qui facilite leur rupture ou leur découpe à l'endroit approprié.

Une fois la grille 7 séparée de la peau 3, il subsiste sur la peau 3 des portions de pont de matière 33 comme on le voit sur la figure 4.

La grille de remplacement 19 peut alors être présentée devant la face interne de la peau 3 de manière à ce que les fentes 27 des oreilles de fixation 25 se trouvent au droit des languettes d'encliquetage 17 de la peau 3.

Il ne reste qu'à appliquer la grille de remplacement 19 contre la face intérieure de la peau 3 en mettant les oreilles de fixation 25 en appui contre les portions de pont de matière 33, tandis que les languettes d'encliquetage 17 pénètrent dans les fentes 27 et, en ayant traversé toute l'épaisseur de cette fente 27, retiennent la grille de remplacement 19 contre la peau 3.

La grille de remplacement 19 se trouve alors exactement dans la même position que la grille d'origine 7 et son interface avec la peau 3 est tout à fait similaire à celle de la grille d'origine 7 du fait que la zone sécable 31 des ponts de matière 14 et 15 n'est pas visible depuis l'extérieur du bouclier 1.

On voit que la peau 3 qui vient d'être décrite présente le double avantage d'être munie d'une grille d'origine 7, ce qui évite la fabrication séparée puis le montage de cette grille 7, et d'autoriser le remplacement de cette grille 7 en cas de besoin, sans remplacement du reste du bouclier.

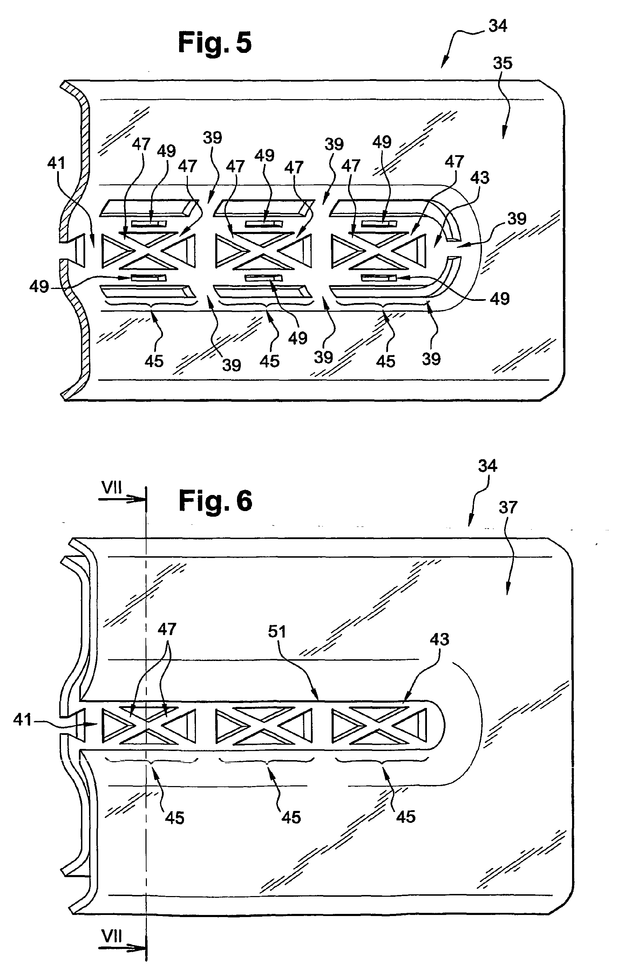

Dans le mode de réalisation des figures 5 à 9, le bouclier de pare-chocs 34 est constitué de deux parties à savoir d'une part une armature 35 représentée sur la figure 5, et d'autre part une peau 37 visible sur la figure 6.

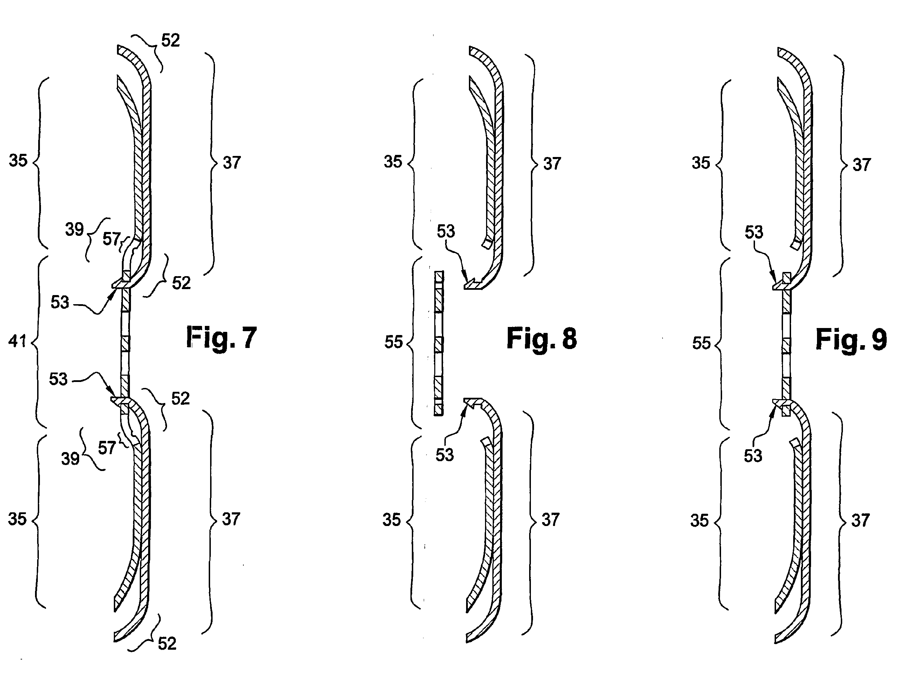

Comme on le voit sur les figures 7 à 9, l'armature 35 a notamment pour fonction de soutenir la peau 37 dans ses régions planes. D'autres fonctions non représentées ici peuvent également être remplies par l'armature 35, comme la fixation d'organes ou le référencement par rapport à une pièce de carrosserie voisine.

Comme on le voit sur la figure 5, l'armature 35 constitue la portion du bouclier 34 qui inclut des ponts de matière 39 avec une grille d'origine 41, réalisé d'un seul tenant avec l'armature 35 lors du moulage par injection de cette dernière.

Dans l'exemple décrit, la grille 41 comporte un cadre 43 autour d'alvéoles rectangulaires 45 obturées chacune par un croisement de deux barreaux obliques 47.

La grille 21 se trouve en retrait de la face avant de l'armature 35.

Des fentes 49 sont ménagées dans le cadre 43 de la grille 41, au-dessus et en dessous de chaque alvéole 47. La fonction de ces fentes 49 va être décrite en liaison avec la peau 37 qui est représentée notamment sur la figure 6.

Cette peau 37 comprend une ouverture centrale 51 de dimensions légèrement inférieures à celles du cadre 43 de la grille 41, de sorte que lorsque la peau 37 recouvre l'armature 35, comme cela est représenté sur la figure 6, les bords 52 de l'ouverture de la peau recouvrent le cadre 43 et dissimulent les fentes 45 pour ne laisser voir que les barreaux 47 et les alvéoles 45.

Partant de ces bords 52 dirigés vers l'intérieur de la peau, des languettes d'encliquetage 53 sont disposées de manière à coïncider avec les fentes 49 de la grille lorsque la peau 37 est parfaitement positionnée par rapport à la grille 41.

Ainsi, comme on le voit sur la figure 7, lorsque la peau 37 recouvre l'armature 35, les languettes d'encliquetage 53 s'accouplent avec les fentes 49 du cadre 43 de la grille 41 de sorte que le bord 52 de l'ouverture de la peau 37 est encliqueté avec la grille 41.

Ainsi, dans la grille d'origine 41, issue de moulage avec l'armature 35, les fentes 49 jouent le rôle de moyens de positionnement de la peau 37, laquelle est donc directement mise en référence par rapport à la grille 41.

Une fois cette mise en référence effectuée, l'armature 35 peut être maintenue en position et fixée par des moyens séparés.

Dans ce mode de réalisation, une grille de remplacement 55 est constituée par une grille identique à celle décrite en référence à la figure 5, à la différence près que ses barreaux peuvent présenter une configuration différente.

Du fait de cette identité entre grille d'origine 41 et grille de remplacement 55, la grille de remplacement 55 peut provenir du moulage d'une autre armature et découpe des ponts de matière à la base du cadre de la grille.

En d'autres termes, il n'est pas nécessaire, dans ce mode de réalisation, de prévoir un moule d'injection séparé pour les grilles de remplacement 55. En particulier, les grilles de remplacement 55 peuvent provenir de rebus de moulage de l'armature 35, dans lesquels la grille 41 serait de bonne qualité mais pas le reste de l'armature 35.

On va maintenant décrire la manière dont la grille d'origine 41 peut être remplacée par une grille de remplacement 55, en référence aux figures 8 et 9.

Les ponts de matière 39 sont tout d'abord découpés ou rompus, de préférence au voisinage de leur zone de fragilité ou zone sécable 57 visible sur la figure 7.

Une fois la grille d'origine 41 dissociée de l'armature 35, il ne reste plus qu'à la désencliqueter de la peau 37 pour lui substituer une grille de remplacement 55, qui est à son tour encliquetée sur la peau 35, comme on le voit sur les figures 8 et 9.

Les languettes d'encliquetage 53 de la peau servent donc de moyens de fixation de la grille de remplacement.

Une fois le remplacement effectué, comme on le voit sur la figure 9, les ponts de matière 39 rompus ne sont toujours pas visibles depuis l'extérieur du bouclier 34. En revanche, la peau 37 qui a été positionnée par rapport à la grille d'origine 41 et a été fixée en positon par des moyens non représentés, conserve la position qui lui avait été imposée par la grille d'origine 41 et garantit le bon positionnement de la grille de remplacement 55.

Ce mode de réalisation est d'autant plus avantageux que la grille d'origine 41 appartient à une pièce, c'est-à-dire une armature 35, qui remplit un nombre élevé de fonctions. En particulier, l'armature 35 pourrait appartenir à une pièce de carrosserie voisine devant être parfaitement mise en référence par rapport à la peau 37 qui vient coiffer l'armature 35.

## Revendications

1. Ensemble d'une pièce de carrosserie en matière plastique et d'une grille de remplacement, la pièce de carrosserie comportant une peau (1; 37) et une grille d'origine (7; 41) moulée d'un seul tenant avec une portion de la pièce et réunie à cette dernière par des ponts de matière (14, 15; 39), où la pièce comporte des moyens (17; 53) de fixation de la grille de remplacement (19; 55), qui sont également issus de moulage avec une portion de la pièce.

2. Ensemble selon la revendication 1, la pièce de carrosserie constituant un bouclier de pare-chocs.

3. Ensemble selon la revendication 2, la pièce de carrosserie étant constituée par l'ensemble d'une peau (37) de pare-chocs et d'une armature (35), destinées à être fixées l'une sur l'autre, la peau constituant une portion de la pièce qui inclut les moyens de fixation (53) pour la grille de remplacement (55) et l'armature constituant une autre portion de la pièce qui inclut les ponts de matière (39) avec la grille d'origine (41).

4. Ensemble selon la revendication 3, dans lequel la peau (37) de la pièce est agencée pour cacher les ponts de matière (39) entre l'armature (35) et la grille d'origine (41).

5. Ensemble selon l'une quelconque des revendications 3 et 4, dans lequel la grille d'origine (41), issue de moulage avec l'armature, comporte des moyens (49) de positionnement de la peau.

6. Ensemble selon la revendication 5, dans lequel les moyens (49) de positionnement de la peau présents sur la grille d'origine (41) s'accouplent avec les moyens (53) de fixation de la grille de remplacement présents sur la peau (37).

7. Ensemble selon l'une quelconque des revendication 1 à 6, dans lequel la pièce comprend en outre des seconds moyens de fixation de la grille de remplacement, pour se substituer aux premiers moyens de fixation s'ils sont détériorés.

## Claims

1. Assembly a bodywork element made of plastics material and of a replacement grille, the bodywork element comprising a skin (1 ; 37) and an original grille (7 ; 41) integrally molded with a portion of the element and united therewith via bridges of material (14, 15 ; 39), the element including fastener means (17 ; 53) for fastening the replacement grille (19 ; 55), which fastener means are likewise integrally molded with a portion of the element.

2. The assembly according to claim 1, in which the element constitutes a bumper shield.

3. The assembly according to claim 2, where the element is constituted by an assembly of a bumper skin (37) and a strength member (35) that are designed to be fastened to each other, the skin constituting a portion of the element that includes the fastener means (53) for a replacement grille (55), and the strength member constituting another portion of the element that includes the bridges of material (39) connecting with the original grille (41).

4. The assembly according to claim 3, in which the skin (37) of the element is arranged to hide the bridges of material (39) between the strength member (35) and the original grille (41).

5. The assembly according to claim 3 or 4, in which the original grille (41) integrally molded with the strength member includes means (49) for positioning the skin.

6. The assembly according to claim 5, in which the skin-positioning means (49) present on the original grille (41) couple with the fastener means (53) for fastening the replacement grille and present on the skin (37).

7. The assembly according to any one of claims 1 to 6, further comprising second fastener means for fastening a replacement grille, to take the place of the first fastener means in the event of them being damaged.

## Patentansprüche

1. Gesamtheit, bestehend aus einem Karosserieteil aus Kunststoff und einem Austauschgrill, wobei das Karosserieteil eine Haut (1; 37) und einen Originalgrill (7; 41) umfasst, wobei der Originalgrill einteilig mit einem Teil des Karosserieteils geformt ist und mit letzterem über Materialbrücken verbunden ist (14, 15; 39), wobei das Karosserieteil Befestigungsmittel des Austauschgrills enthält (19; 55), die gleichermaßen aus der Formung mit einem Teil des Karosserieteils stammen.

2. Gesamtheit nach Anspruch 1, wobei das Karosserieteil eine Stoßfängerabdeckung darstellt.

3. Gesamtheit nach Anspruch 2, wobei das Karosserieteil durch die Gesamtheit aus einer Haut (37) eines Stoßfängers und einer Abdeckung (35), dazu bestimmt aufeinander befestigt zu werden, gebildet wird, wobei die Haut einen Anteil des Teils darstellt, der die Befestigungsmittel (53) für einen Austauschgrill (55) einschließt, und die Abdeckung einen anderen Anteil des Teils darstellt, der die Materialbrücken (39) mit dem Originalgrill (41) einschließt.

4. Gesamtheit nach Anspruch 3, bei der die Haut (37) des Teils angeordnet ist, um die Materialbrücken (39) zwischen der Abdeckung (35) und dem Originalgrill (41) zu verdecken.

5. Gesamtheit nach einem der Ansprüche 3 und 4, bei welcher der Originalgrill (41), hervorgegangen aus dem Formen mit der Abdeckung, Mittel (49) zum Positionieren der Haut umfasst.

6. Gesamtheit nach Anspruch 5, bei der sich die auf dem Originalgrill (41) vorhandenen Mittel (49) zum Positionieren der Haut mit den Mitteln (53) zur Befestigung des auf der Haut (37) vorhandenen Austauschgrills verbinden.

7. Gesamtheit nach einem der Ansprüche 1 bis 6, bei der das Teil zusätzlich zweite Mittel zur Befestigung eines Austauschgrills umfasst, um die ersten Mittel zur Befestigung zu ersetzen, falls diese beschädigt sind.
